# EUROPÄISCHE PATENTSCHRIFT

(11) **EP 2 533 971 B1**
(45) Veröffentlichungstag und Bekanntmachung des Hinweises auf die Patenterteilung: **12.10.2016**
(21) Anmeldenummer: 11703453.8
(22) Anmeldetag: 11.02.2011
(51) Int. Cl.: C09J 7/02, G09F 3/02, G09F 3/10

(54) **VERFAHREN UND VORRICHTUNG ZUR HERSTELLUNG VON ETIKETTEN**
METHOD AND DEVICE FOR PRODUCING LABELS
PROCÉDÉ ET DISPOSITIF DE FABRICATION D'ÉTIQUETTES

(30) Priorität: 11.02.2010 DE 102010001794
(43) Veröffentlichungstag der Anmeldung: 19.12.2012
(73) Patentinhaber: Kreutz, Kerry Wilhelm, 51109 Köln (DE)
(72) Erfinder: KREUTZ, Wilhelm, 51109 Köln (DE)
(86) Internationale Anmeldenummer: PCT/EP2011/052021
(87) Internationale Veröffentlichungsnummer: WO 2011/098550

(56) Entgegenhaltungen:
- EP-A1- 1 211 095
- US-A- 4 008 115
- US-A- 4 022 926

## Beschreibung

Die Erfindung betrifft ein Verfahren zur Herstellung von Etiketten, bestehend aus einer Grundschicht, die an ihrer Unterseite mit einer Klebstoffschicht versehen ist, einer mit einer Oberseite der Grundschicht verbundenen Deckschicht und einer lösbar an der Klebstoffschicht anhaftenden Trägerschicht, wobei das Verfahren die folgenden Schritte umfasst:
a) Ein Verbund aus der Grundschicht, der Klebstoffschicht und der Trägerschicht wird auf einer der Klebstoffschicht abgewandten Oberfläche der Grundschicht an verschiedenen relativ zueinander beabstandeten Stellen mittels einer Dosiereinrichtung jeweils mit einer Menge eines in fließfähigem Zustand vorliegendem Materials der Deckschicht versehen, wobei durch einen Fließvorgang des Materials auf der Oberfläche der Grundschicht die endgültige Form der Deckschicht gebildet wird.
b) Das Material der in ihrer endgültigen Form vorliegenden Deckschicht wird, zumindest teilweise, ausgehärtet.

Darüber hinaus betrifft die Erfindung eine Vorrichtung zur Herstellung von Etiketten, die eine Grundschicht, die auf ihrer Unterseite mit einer Klebstoffschicht versehen ist, eine mit einer Oberseite der Grundschicht verbundenen Deckschicht und eine abnehmbar an der Klebstoffschicht anhaftende Trägerschicht aufweisen, umfassend
a) eine Dosiereinrichtung, mit der auf einer der Klebstoffschicht abgewandten Oberfläche der Grundschicht, die mit der Klebstoffschicht und der Trägerschicht einen Verbund bildet, eine Menge eines in fließfähigem Zustand vorliegenden Materials der Deckschicht aufbringbar ist,
b) eine Verfahreinrichtung, mit der der Verbund aus der Grundschicht der Klebstoffschicht und der Trägerschicht relativ zu der Dosiereinrichtung so bewegbar ist, dass an verschiedenen relativ zueinander beabstandeten Stellen des Verbundes das Material der Deckschicht aufbringbar ist,
c) eine Härteeinrichtung, mit der das in seiner endgültigen Form vorliegende Material der Deckschicht mittels Strahlung und/oder Temperatur und/oder Druck und/oder Luftkontakt und/oder Zusatz mindestens einer Chemikalie zumindest teilweise aushärtbar ist, wobei der Verbund in der Dosiereinrichtung, der Härteeinrichtung und auch in eventuell dazwischen befindlichen Bereichen im Wesentlichen horizontal ausgerichtet ist.

### Stand der Technik

Etiketten der vorstehend beschriebenen Art werden häufig als "Doming" bezeichnet. Es handelt sich hierbei um eine Technologie zur Herstellung von gewölbten, in der Regel transparenten oder transluzenten Beschichtungen (Dome) in beliebigen Farben, vorstehend als "Deckschicht" bezeichnet, auf bedruckten oder unbedruckten Folien, vorstehend als "Grundschicht" bezeichnet, oder anderen Formkörpern. Die typischerweise konvexe Gestalt der Beschichtung ergibt sich aus dem Umstand, dass sich das zunächst fließfähige Harz bei bzw. nach dem Aufbringen seitlich ausbreitet und - bedingt durch die Oberflächenspannung - an den erhabenen Kanten der Grundschicht zum Stillstand gelangt und aushärtet. Mit Hilfe der Doming-Technologie kann die Wirkung, insbesondere im Hinblick auf optische Effekte, sowie die haptische Qualität von Drucken, Schriften, Werbeartikeln u.ä. deutlich erhöht werden. Die Doming-Technologie ist daher sehr beliebt, weil sich mit ihr wirkungsvoll Werbeziele und Verkaufserfolge fördern lassen.

Unter "Etiketten" im Sinne der vorliegenden Anmeldung sollen dabei aufklebbare Kennzeichnungen in beliebigen Formen verstanden werden. Beispielhaft und nicht abschließend für die Anwendung von Domings sei das folgende genannt:
- Etiketten und Aufkleber aller Formen,
- hochwertige Schilder mit Schriften, Logos und Piktogrammen (auf Edelstahl, Messing, Glas, Plexiglas und lackiertem Aluminium),
- repräsentative Gebäude- und Objektkennzeichnungen im Innen- und Außenbereich (insbesondere 3D-Beschriftung auf Glastüren),
- Autobeschriftungen mit 3D-Logos und -Schriften,
- Beschriftung von Werbeträgern (Autoschlüssel, Gravierplatten, Lineale, Namensschilder, Buttons, usw.),
- dekorative Kennzeichnung von Geräten und Ausrüstungen mit 3D- Schriften,
- Messebau mit 3D-Schriften und -Logos.

Zur Herstellung der Deckschichten von Doming-Etiketten werden Kunstharze auf Basis von Polyurethan, Epoxid oder isocyanatfreie UV-härtende Domingharze (letzteres bspw. vertrieben von der Firma SuraChemicals unter der Handelsbezeichnung "SurACer®").

Deckschichten auf Epoxidharzbasis sind hartelastisch und weisen keine Flexibilität auf. Sie sind für den Außeneinsatz kaum geeignet, da sie keine UV-Stabilität besitzen und daher zum Vergilben neigen. Darüber hinaus beträgt die Topfzeit des nur zweikomponentig lieferbaren Materials lediglich einige Minuten, woraus sich eine technisch, wirtschaftlich und finanziell aufwändige Verarbeitung ergibt. Ferner enthalten Epoxidharze giftige und ätzende Bestandteile, woraus sich zum einen ökologische Belastungen sowie gesundheitsgefährdende Effekte (Gefahr der Hautirritation) ergeben. Während somit im Falle einer manuellen Doming-Herstellung in kleiner Stückzahl gewisse Vorteile gegenüber anderen Technologien bestehen, eignen sich die Epoxidharze aufgrund der vorgenannten Nachteile nicht für eine industrielle Fertigungsweise.

Als zweite Stoffgruppe ist die Verwendung von Polyurethan als Material der Doming-Deckschicht bekannt. Polyurethanharze sind lufttrocknend, wobei der Trocknungsvorgang langsam vor sich geht und bis zu mehreren Stunden in Anspruch nimmt und von der Luftfeuchtigkeit beeinflusst wird. Nach der Aushärtung besitzt das Doming eine hohe Flexibilität und aufgrund seiner UV- und Klimastabilität sind derartige Doming-Etiketten auch für den Außeneinsatz sehr gut geeignet. Auch das Polyurethanharz ist lediglich zweikomponentig verfügbar und innerhalb einer lediglich sehr kurzen Topfzeit verarbeitbar, woraus wiederum ein hoher technischer Verarbeitungsaufwand resultiert. Auch bei der Verarbeitung von Polyurethanharzen bilden toxische Bestandteile der Komponenten (Isocyanat) einen Problempunkt in Bezug auf die Umwelt im Allgemeinen und das mit der Herstellung beschäftigte Personal im Besonderen. Durch die Einstufung der Isocyanate als Gefahrgut entstehen im Logistikbereich hohe Lager- und Transportkosten. Auch die Sondermüllentsorgung der Reststoffe verursacht zusätzlichen finanziellen Aufwand.

Schließlich sind noch UV-härtende Domingharze (beispielsweise SurACer®) für die Doming-Herstellung bekannt. Hierbei handelt es sich um ein lichthärtendes, insbesondere UVhärtendes Harzsystem, das sich durch eine sehr kurze Härtezeit (wenige Minuten) auszeichnet, wobei die Luftfeuchtigkeit keinen Einfluss auf den Härtevorgang und die Härtezeit hat. Wie bei Polyurethanharzen auch, ist eine Eignung für den Außenbereich aufgrund der UV- und Klimastabilität gegeben. Im Hinblick auf die Handhabung ist das Material als einfach zu beurteilen, da es eine sehr lange Topfzeit (bei Kühlung mehrere Tage) besitzt, einen geringen Aufwand für Misch- und Dosierarbeiten erfordert und sowohl ein- als auch zweikomponentig lieferbar ist. Belastungen beim Handling treten im Wesentlichen nicht auf, da das Material aus ungiftigen Bestandteilen besteht, die für den Menschen ungefährlich sind und weder beim Transport noch bei der Lagerung als Gefahrgut einzustufen sind. Aufgrund der sehr geringen ökologischen Belastungen ist eine Entsorgung der Reststoffe der Produktion über den normalen gewerblichen Abfall möglich. Insgesamt liegt somit eine vergleichsweise hohe Wirtschaftlichkeit bei der Doming-Herstellung vor, die die Verwendung dieses Materials auch in der industriellen Fertigung verwendbar macht.

Als nachteilig bei den bekannten Verfahren zur Doming-Herstellung ist es anzusehen, dass die Produktivität gering und der apparative Aufwand groß ist. Die Etiketten sind auf rechteckförmigen Bögen der Trägerschicht (typischerweise im A4- oder A3-Format) angeordnet, wobei die Grundschicht vor dem Aufbringen des Materials der Deckschicht bereits durch Stanzen so bearbeitet ist, dass das Material der Grundschicht zwischen benachbarten und beabstandeten Etiketten entfernbar oder bereits entfernt ist. Auf einer Art Dosiertisch werden die Bögen und die Dosiereinrichtung (typischerweise in Form einer Dosiernadel) relativ zueinander so bewegt, dass eine matrixförmige Anordnung aus Spalten und Zeilen der Etiketten auf dem Bogen erhalten wird. Zur Erzeugung von Domings mit komplexen Geometrien ist auch während des Aufbringens ein Verfahren der zu beschichtenden Grundschicht möglich. Anschließend werden die Bögen mit den noch nicht ausgehärteten Domings bei lufthärtenden Systemen in mehreren Lagen in Härteeinrichtungen allein unter Luftkontakt oder unterstützend mittels Wärmebehandlung ausgehärtet. Bei lichthärtenden Harzsystemen erfolgt eine Aushärtung in einer Härteeinrichtung in Form einer Kammer, in der die Deckschicht mit UV-Strahlung beaufschlagt wird. Unter einer im Wesentlichen horizontalen Ausrichtung des Verbundes werden dabei auch Abweichungen von einer exakten horizontalen Ausrichtung verstanden, die kleiner als 10° sind. Auch im Fall leichter Abweichungen von einer exakten horizontalen Ausrichtung muss jedenfalls eine ganz kontrollierte und steuerbare Verteilung des Materials der Deckschicht möglich sein. Insbesondere muss ein unkontrolliertes, durch die Schwerkraft bedingtes Verlaufen des Deckschichtmaterials vermieden werden.

Als besonderes aufwendig und nachteilig ist dabei die Notwendigkeit der Überführung der mit dem Deckschichtmaterial versehenen Bögen von der Dosiereinrichtung in die Härteeinrichtung anzusehen, sowie die Notwendigkeit, bis zur Aushärtung einen Staubeintrag auf die 0-berfläche der Deckschicht zu vermeiden, da dies die Oberflächenqualität eklatant herabsetzt und bis hin zu späterem Ausschuss der betroffenen Domings führen könnte. Die Aufrechterhaltung von Reinraumbedingungen in größeren Produktionsabschnitten, d.h. Raumvolumina, stellt einen nicht unerheblichen technischen und finanziellen Aufwand bei den bekannten Verfahren dar.

Aus der US 4,008,115 ist ein Verfahren zur Herstellung dauerhafter beschichteter Etiketten bekannt. Der Verbund aus Grundschicht, Klebstoffschicht und Trägerschicht liegt in Form eines auf einer Rolle aufgewickelten Bandes vor und wird anschließend in drei hintereinander angeordneten Walzenstationen mit einem UV-härtbaren Harz beschichtet. Die gesamte Beschichtungsdicke beträgt ca. 7,6 µm. Bei dem Mechanismus zur Beschichtung des Verbundes mit dem Material der Deckschicht handelt es sich um Vorrichtungen aus dem Bereich der Druckereitechnik, womit über die gesamte Fläche des Verbundes, d.h. insbesondere auch im Bereich der Zwischenräume.zwischen benachbarten Etiketten, das Deckschichtmaterial aufgebracht wird. Durch eine Fließbewegung bedeckt das Deckschichtmaterial sowohl die seitlichen Stirnflächen der Grundschicht und der Klebstoffschicht, als auch die Tragschicht in den Zwischenbereichen zwischen benachbarten Etiketten, wobei sich dort aufgrund der Kohäsionskräfte in dem Material in Verbindung mit den speziellen Oberflächeneigenschaften der Silikonbeschichtung der Trägerschicht eine Art Tropfen oder Raupen ausbilden. Es besteht daher zum einen die Gefahr, dass diese Tropfen oder Raupen sich mit dem Deckschichtmaterial an den Stirnseiten der Etiketten verbinden und somit ein Zusammenkleben benachbarter Etiketten bewirken. Darüber hinaus ist der Verbrauch des Deckschichtmaterials unnötig hoch, da die zwischen den Etiketten verbleibenden Materialüberschüsse verloren sind. Ferner ist der apparative Aufwand zur Beschichtung groß, da in drei aufeinander folgenden und vertikal übereinander angeordneten Stationen jeweils nur eine Teilbeschichtung mit dem Deckschichtmaterial vorgenommen werden kann.

Ferner ist aus der US 4,253,899 noch ein Verfahren zur Etikettenherstellung bekannt, bei dem die Deckschicht bereits vor dem Verbinden mit dem Verbund in Form eines endlosen Films vorliegt.

Schließlich offenbart die US 4,759,982 noch ein Verfahren zur Herstellung von Etiketten, bei dem die Deckschicht mit Hilfe eines Siebdruckverfahrens aufgebracht wird. Dabei sollen die senkrecht zu dem Verbund ausgerichteten Stirnseiten des Etiketts bewusst mit dem Deckschichtmaterial versiegelt werden. Die Dicke der eine Schutzfunktion aufweisenden transparenten Deckschicht soll gemäß diesem bekannten Verfahren zwischen 0,01 mm und 0,1 mm betragen.

### Aufgabe

Der Erfindung liegt die Aufgabe zugrunde, ein Verfahren und eine Vorrichtung zur Herstellung von Doming-Etiketten vorzuschlagen, mit dem bzw. der sich die Doming-Etiketten auf besonders rationelle und kostengünstige Weise herstellen lassen.

### Lösung

Ausgehend von dem Verfahren der eingangs beschriebenen Art wird die zugrunde liegende Aufgabe dadurch gelöst, dass der Verbund aus der Grundschicht, der Klebstoffschicht und der Trägerschicht der Dosiereinrichtung in Form eines Bandes zugeführt wird.

Die Zuführung bandförmigen Materials, d.h. vorzugsweise das Abspulen des Materials von einer Vorratsrolle, erlaubt eine besonders effiziente Herstellungsweise, weil die komplizierte und umständliche Handhabung von Bogenware entfällt. Die Erfindung ermöglicht somit bei der Doming-Herstellung einen kontinuierlichen Fließprozess und rückt ab von dem bislang allein realisierten Prinzip des Batch-Prozesses (Chargenproduktion mit einem Bogen als Charge). Ein weiterer großer Vorteil der erfindungsgemäßen Vorgehensweise besteht darin, dass die fertigen Doming-Etiketten nach der Aushärtung der Deckschicht wiederum in Bandform vorliegen und vorzugsweise in Form einer Rolle aufgewickelt werden. Eine derartige Rolle fertiger Doming-Etiketten kann in üblichen Etikettiergeräten Verwendung finden, so dass auch der Vorgang des Applizierens der Doming-Etiketten gegenüber dem Stand der Technik stark vereinfacht wird. Bislang war es nämlich üblich, dass die Doming-Etiketten von Hand von dem jeweiligen Bogen abgenommen und am Anwendungsort appliziert wurden. Alternativ hierzu ist es auch möglich, mittels komplizierter roboterartiger Greifersysteme die fertigen Doming-Etiketten von der Bogenware auf das zu kennzeichnende Produkt zu applizieren.

Aufgrund der Beibehaltung der horizontalen Ausrichtung des Verbundes zwischen der Aufbringung des Deckschichtmaterials und der zumindest teilweisen Aushärtung wird ein kontrolliertes Verteilen des Deckschichtmaterials gewährleistet und insbesondere ein unkontrolliertes Fließen des noch nicht ausgehärteten Deckschichtmaterials verhindert. Leichte Abweichungen von einer exakten horizontalen Ausrichtung sind dabei zulässig, solange die gewollte Verteilung des Deckschichtmaterials bis zu dessen endgültiger Aushärtung garantiert werden kann.

Vorzugsweise wird der Verbund aus der Grundschicht, der Klebstoffschicht und der Trägerschicht vor dem Aufbringen des Deckschicht-Materials von einer einen Vorrat bildenden Rolle abgewickelt und/oder der Verbund aus der Grundschicht, der Klebstoffschicht, der Trägerschicht und der ausgehärteten Deckschicht zu einer Rolle aufgewickelt.

Des Weiteren kann es vorteilhaft sein, wenn der Verbund aus der Grundschicht, der Klebstoffschicht und der Trägerschicht vor dem Aufbringen des Materials der Deckschicht von einem als Leporalo gefalteten Vorratspaket entfaltet und/oder der Verbund aus der Grundschicht, der Klebstoffschicht und der Trägerschicht und der zumindest teilweise ausgehärteten Deckschicht zu einem in Form eines Leporalo vorliegenden Fertigpaket zusammengefaltet wird. Dabei ist vor und nach dem Auftrag des Deckschichtmaterials eine beliebige Kombination aus rollenförmiger Aufwicklung oder Leporaloartigem Falten des Bandes möglich.

Um die Produktivität des erfindungsgemäßen Verfahrens weiter zu steigern, kann auf dem Band, quer zu einer Transportrichtung betrachtet, an mehreren Stellen nebeneinander gleichzeitig das Material der Deckschicht aufgebracht werden. Auf diese Weise wird somit ein breites Band in mehreren "Bahnen" parallel zueinander mit Doming-Etiketten versehen, wobei das Band - vor oder nach dem Aufbringen des Deckschichtmaterials - in Längsrichtung geteilt werden kann, um später "einreihig" in Etikettiergeräten Verwendung finden zu können.

Alternativ zu der Aufbringung in mehreren parallelen Bahnen ist es auch möglich, auf jeweils derselben Bahn des Bandes an verschiedenen Stellen hintereinander (d.h. in Transportrichtung betrachtet) gleichzeitig das Material der Deckschicht aufzubringen. Auch hierdurch kann die Produktivität gesteigert werden.

Ein besonders geringer Verbrauch des Deckschichtmaterials lässt sich erreichen und gleichfalls ein ungewolltes Zusammenkleben benachbarter Etiketten verhindern, wenn ausschließlich Nutzbereiche der Grundschicht mit dem Material der Deckschicht versehen werden, hingegen zwischen benachbarten Nutzbereichen befindliche Zwischenbereiche von dem Material der Deckschicht frei gelassen werden. Insbesondere ist in diesem Zusammenhang ein "Entgittern" des Verbundes vor der Aufbringung des Deckschichtmaterials sinnvoll, d.h. in den Zwischenbereichen wird zumindest das Material der Grundschicht vorzugsweise aber auch der Klebstoffschicht, entfernt.

Die erfindungsgemäß hergestellten Etiketten erhalten ein besonders attraktives Aussehen, wenn die Deckschicht in einer konvexen Form ausgebildet wird. Die Dicke der Deckschicht in der endgültigen Form sollte zwischen 0,5 mm und 2 mm, vorzugsweise zwischen 1,0 mm und 2 mm, betragen.

Ein Aufbringen des Deckschichtmaterials in einer großen Dicke lässt sich - in Verbindung mit einer entsprechend hohen Viskosität des Materials - erzielen, wenn das Deckschichtmaterial mit Hilfe einer Düse aufgetragen wird und diese Düse in Form eines zusammenhängenden Stroms verlässt und in dieser Form auf die Grundschicht auftrifft. Dabei kann ein Strömungsquerschnitt der Düse wesentlich kleiner sein als eine Querschnittsfläche der in ihrer endgültigen Form vorliegenden Deckschicht des fertigen Etiketts, da aufgrund der Fließeigenschaften des Deckschichtmaterials eine gleichmäßige Verteilung erreicht wird. Insbesondere ist die Ausbildung kreisrunder Etiketten mit entsprechend kreisförmigen Deckschichten einfach möglich, wenn das Deckschichtmaterial an zentraler Stelle auf die Oberfläche des Nutzbereichs der Grundschicht aufgebracht wird und allseitig gleichmäßig auseinanderfließt.

In vorrichtungstechnischer Hinsicht wird die zugrunde liegende Aufgabe ausgehend von einer Vorrichtung der eingangs beschriebenen Art durch Transportrollen gelöst, mit denen der in Form eines Bandes vorliegende Verbund aus der Grundschicht, der Klebstoffschicht und der Trägerschicht zumindest vor und bis hin zu der Dosiereinrichtung förderbar ist. Die Erfindung geht somit von einem kontinuierlichen Prozess des Zuförderns des Verbundes aus, wobei es sowohl im Rahmen der Erfindung liegt, die Integrität des Bandes nach der Erzeugung der Etiketten aufzulösen und diese vereinzelt weiterzubehandeln als auch die Förderung des Verbundes von der Dosiereinrichtung weg mit Hilfe von weiteren Transportrollen vorzunehmen. Letztgenannte Variante dürfte selbstverständlich meist zu bevorzugen sein, weil der gesamte Prozess auf diese Weise kontinuierlich durchgeführt werden kann und der weitere Vorteil entsteht, dass das zu einer Rolle aufgewickelte Band mit den fertigen Etiketten später in ein Etikettiergerät eingesetzt werden kann, von dem aus ein kontinuierliches Abspenden der Bonding-Etiketten erfolgt.

Gemäß der Erfindung ist des Weiteren eine Rollenlagerung für eine aus dem Band bestehende Rolle vorgesehen, wobei das Band aus dem Verbund aus der Grundschicht, der Klebstoffschicht und der Trägerschicht vor dem Aufbringen des Materials der Deckschicht besteht. Von einer derartigen Rollenlagerung aus lässt sich für eine lange Zeit und für eine große Anzahl von Etiketten das zu beschichtende "Rohmaterial" kontinuierlich abziehen.

Im Sinne einer hohen Effizienz der Anlage ist des Weiteren eine vorzugsweise antreibbare weitere Rollenlagerung für eine aus dem Band mit der ausgehärteten Deckschicht zu bildende Rolle vorgesehen. Mittels einer solchen Vorrichtung wird "von der Rolle auf die Rolle" gearbeitet, so dass ein Abwickeln des Verbundes nur zum Zwecke und nur im Bereich der Dosiereinrichtung und der Härteeinrichtung erfolgt wohingegen im Übrigen auf rationelle Weise lediglich Rollenmaterial gehandhabt wird. Trotz großer Leistungsfähigkeit kommt eine derartige Vorrichtung mit einem sehr geringen Raumbedarf aus.

Die Erfindung weiter ausgestaltend ist vorgesehen, dass die Härteeinrichtung und/oder die Dosiereinrichtung einen Tunnel aufweist bzw. aufweisen, mit dem luftgetragene Partikel von der Oberfläche der Deckschicht vor deren Aushärtung fernhaltbar sind. Zu diesem Zweck weist der Tunnel auch in seinem Eintrittsquerschnitt und Austrittsquerschnitt entsprechende Abschirmungen auf, um ein Eindringen möglicherweise partikelbelasteter Umgebungsluft zu verhindern.

Gemäß einer vorteilhaften Weiterbildung der Erfindung wird vorgeschlagen, dass mindestens ein Dosierelement der Dosiereinrichtung, aus dem ein Strom des Materials der Deckschicht abgebbar ist, in eine Richtung quer und/oder parallel zu der Transportrichtung verfahrbar ist. Eine derartige Verfahrbarkeit erlaubt die Erzeugung auch komplexer Geometrien bei den Doming-Etiketten, wozu eine relative Verfahrbarkeit von Dosierelement (typischerweise Dosiernadel) und dem zu beschichtenden Verbund notwendig ist.

Schließlich ist gemäß einer Ausgestaltung der Erfindung noch eine zwischen der Härteeinrichtung und einer Rolle zum Aufwickeln des mit den fertigen Etiketten versehenen Bandes angeordnete Hubeinrichtung vorgesehen, die ein Hubelement aufweist, das auf eine Oberseite einer von dem Band gebildeten Schlaufe einwirkt, wobei bei einer Abwärtsbewegung des Hubelements eine konstante Kraft, insbesondere lediglich dessen Gewichtskraft, auf das Band wirkt und dessen Schlaufe gespannt hält, wohingegen das Hubelement mittels eines Hubantriebs anhebbar ist um die Schlaufe anschließend frei von äußeren Kräften durch Aufwickeln auf die Rolle aufzulösen. Auf die vorbeschriebene Weise wird das Band kontinuierlich durch die Dosiereinrichtung und die Härteeinrichtung gezogen, aber intermittierend auf der Rolle aufgewickelt, wenn ein hinreichender Vorrat an Band mit ausgehärteten Etiketten angesammelt wurde. Das kräftefreie Aufwickeln des Bandes ohne dass hierbei von der Rolle auch der Bandvorschub in der Härte- und Dosiereinrichtung bewirkt werden müsste, ist wichtig, um eine möglichst geringe Wickelspannung auf der Rolle zu erreichen. Dies wiederum ist von Bedeutung um einen zu hohen radialen Wickeldruck auszuschließen, der eine ungewollte Verformung der Etiketten und spätere Probleme beim Abwickeln und Abspenden der Etiketten in einer Spendeeinrichtung zur Folge haben könnte.

### Ausführungsbeispiel

Das erfindungsgemäße Verfahren wird nachfolgend anhand einer Vorrichtung gemäß der Erfindung, die in der Zeichnung dargestellt ist, näher erläutert:
Es zeigt:
   - Fig. 1:: einen Längsschnitt durch eine Vorrichtung zur Herstellung von Doming-Etiketten,
   - Fig. 2:: einen Schnitt durch einen bandförmigen Verbund,
   - Fig. 3:: wie Figur 2, jedoch mit aufgetragener Deckschicht, und
   - Fig. 4:: einen Ausschnitt aus Fig. 1, jedoch mit einer zusätzlichen Hubeinrichtung.

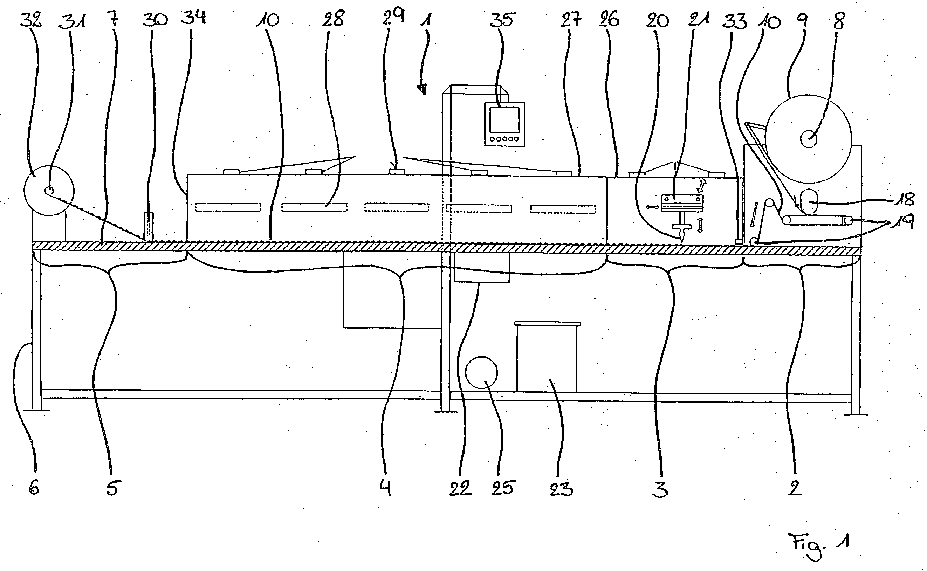

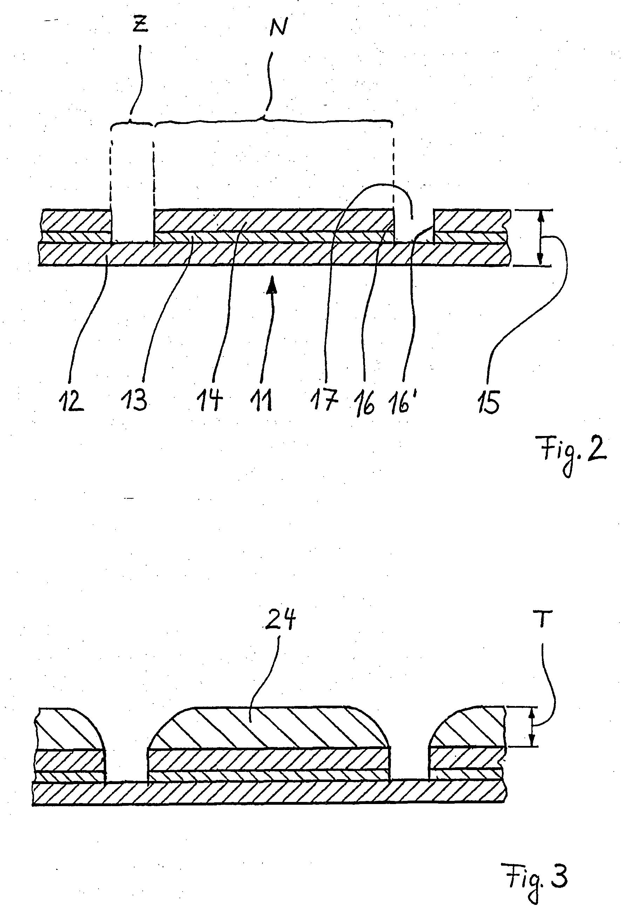

Eine in der Figur 1 in einem Längsschnitt dargestellte Vorrichtung 1 zur Herstellung von Doming-Etiketten besteht aus den wesentlichen Baugruppen Abwickeleinrichtung 2, Dosiereinrichtung 3, Härteeinrichtung 4 und Aufwickeleinrichtung 5. Alle vorgenannten Baugruppen sind auf einem tischartigen Gestell 6 angeordnet, dessen Oberseite von einer Tischplatte 7 gebildet wird. Die Abwickeleinrichtung 2 besitzt eine Rollenlagerung 8 für eine Rolle 9, die von einem Band 10 gebildet wird, welches wiederum aus einem klebtechnisch hergestellten Verbund 11 besteht, dessen Aufbau in Figur 2 näher erläutert ist:

Der Verbund 11 besteht aus einer aus einem Papier oder einer Folie bestehenden Trägerschicht 12, auf die mit Hilfe einer Klebstoffschicht 13 eine Grundschicht 14, die wiederum aus Papier oder Folie bestehen kann, aufgebracht ist. In bekannter Weise ist der Verbund 11 bezogen auf seine Dicke 15 in der Form teilweise gestanzt, dass die Grundschicht 14 und die Klebstoffschicht 13 durchtrennt sind, wohingegen die Trägerschicht 12 im Wesentlichen unversehrt ist und für einen sicheren Transport des Bandes 10 sowohl vor der Aufdosierung der Deckschicht als auch danach sorgen kann. In Figur 2 sind schematisch zwei Stanzlinien 16, 16' dargestellt, die - in einer Draufsicht des Verbundes 11 betrachtet - jeweils beispielsweise einen Kreis bilden, der die Grundfläche des späteren Doming-Etiketts darstellt. Zwischen benachbarten Kreisen und um die kreisförmig umlaufenden Stanzflächen 16, 16' liegt jeweils ein Abfallbereich 17 der Grundschicht 14 und der Klebstoffschicht 13 vor, der vor dem Aufwickeln des Verbundes 11 entfernt wurde, so dass die Bereiche der späteren Etiketten durch erhöhte Bereiche der Grundschicht 14 markiert sind. Der Vorgang der Entfernung der zusammenhängenden Abfallbereiche 17 wird "Entgittern" genannt. Die Bereiche der Grundschicht 14, die später mit der Deckschicht 24 versehen werden, werden im Folgenden als Nutzbereiche N bezeichnet. Dazwischen liegende Bereiche werden Zwischenbereiche Z genannt.

Unterhalb der Rolle 9 befindet sich eine Antriebseinheit 18 für das Band 10. Im Anschluss an die Antriebseinheit sind noch diverse Transportrollen 19 vorhanden, die über die von ihnen bewirkte Umlenkung für den gewünschten Verlauf des Bandes 10 sorgen.

Neben der Abwickeleinrichtung 2 befindet sich die Dosiereinrichtung 3, deren wesentliche Komponenten ein Dosierelement 20 in Form einer Dosiernadel und eine Verfahreinrichtung 21 in Form eines X-Y-Z-Kreuztischs sind. Mit Hilfe des Kreuztischs und einer Steuerungseinrichtung 22 für dessen Antriebe sowie den Bandantrieb lässt sich die Dosiernadel sowohl in vertikale Richtung (Z-Richtung) als auch parallel zu der Längsrichtung des Bandes (X-Richtung) als auch senkrecht in dazu in horizontaler Ebene (Y-Richtung) bewegen.

Wie auch im Stand der Technik bereits üblich, ist das Dosierelement 20 über eine Leitung mit einem beheizten Vorratsbehälter 23 für das in fließfähigem Zustand vorliegende Material einer Deckschicht 24 verbunden, wobei der Behälter und damit auch die Verbindungsleitung mittels eines Kompressors 25 mit Druckluft beaufschlagbar ist, um das Material der Deckschicht 24 fördern zu können.

Mit Hilfe des Dosierelements 20 lässt sich das Material der Deckschicht 24 so auf den Nutzbereichen N der Grundschicht 14 (z.B. im Bereich der stehen gebliebenen kreisförmigen Ausstanzung derselben) aufbringen, dass das Material unter Wirkung der Schwerkraft sowie der Adhäsions- und Kohäsionskräfte auseinander fließt und - in radiale Richtung betrachtet - an der Stanzlinie 16 zum Stillstand kommt, wobei die fertige Deckschicht 24 eine konvexe Form und eine größte Dicke T ungefähr zwischen 0,5 mm und 2,0 mm, vorzugsweise zwischen 1,0 mm und 2,0 mm, besitzt (siehe Figur 3). Die Dosiereinrichtung 3 ist über ihre gesamte Länge in einem Tunnel 26 angeordnet, der von einem z.B. aus Blech gefertigten Gehäuse besteht. Eine in Figur 1 nicht sichtbare Querschnittsfläche am Eingang des Tunnels 26 von der Abwickeleinrichtung 2 her ist mit einer Abschottung versehen. Der Tunnel 26 verhindert im Zusammenwirken mit der Abschottung, dass partikelbelastete Umgebungsluft im Bereich des Aufbringens des fließfähigen Materials der Deckschicht 24 eintreten kann, da ein Sich-Absetzen derartiger Partikel (Flusen, etc.) auf der Deckschicht und Verkleben damit zu einem Qualitätsverlust bis hin zu einem Totalausschuss führt.

Im Anschluss an den Tunnel 26 der Dosiereinrichtung 3 schließt sich ein weiterer Tunnel 27 der Härteeinrichtung 4 an, wobei die vorgenannten Tunnel 26, 27 luftdicht aneinander angeschlossen sind. Innerhalb des Tunnels 27 der Härteeinrichtung 4 befindet sich eine Mehrzahl von Strahlern 28, bei denen es sich im vorliegenden Fall um Leuchtmittel handelt, die Licht im ultravioletten Bereich nach unten auf das auf der Oberfläche der Tischplatte 7 sich bewegende Band 10 abstrahlen, wodurch die emittierte UV-Strahlung auf das Material der Deckschicht 24 trifft.

Bei dem Material der Deckschicht 24 handelt es sich um isocyanatfreies SurACer®, bei dem die Härtung auf einem chemischen Prozess beruht. Es handelt sich dabei um ein 100-prozentiges Festkörpersystem bestehend aus Oligomeren, Monomeren und Photoinitiatoren. Im Wege einer Polymerisation werden die kurzen Molekülketten zu langen, dreidimensionalen Molekülstrukturen vernetzt. Den Auslöser dazu gibt die UV-Strahlung, die den Photoinitiator in Radikale spaltet, wodurch mit sehr hoher Reaktionsgeschwindigkeit die Polymerisation ausgelöst wird. Die Transportgeschwindigkeit des Bandes ist im Hinblick auf die Länge des Tunnels 27 so gewählt, dass die Verweilzeit unter der UV-Strahlung lang genug ist, um eine ausreichende Oberflächenhärte oder sogar eine Durchhärtung der Deckschicht 24 zu erzielen.

Sowohl der Tunnel 26 der Dosiereinrichtung 3 als auch der Tunnel 27 der Härteeinrichtung 4 sind jeweils an ihrer Oberseite mit Absaugstutzen 29 versehen, die an eine nicht dargestellte Absauganlage angeschlossen sind.

In der sich an die Härteeinrichtung 4 anschließenden Aufwickeleinrichtung 5 wird das mit den fertigen Doming-Etiketten versehene Band 10 zunächst noch mittels eines Niederhalters 30 auf die Tischplatte 7 gedrückt, um anschließend auf einer Rollenlagerung 31 zu einer Rolle 32 mit den fertigen Doming-Etiketten aufgewickelt zu werden.

### Das erfindungsgemäße Verfahren läuft dabei im Einzelnen wie folgt ab:

Das Band 10 des Verbundes 11 wird von der Rolle 9 sukzessive abgewickelt und in der Dosiereinrichtung 3 mittels des Dosierelements 20 mit dem Material der Deckschicht 24 versehen. Ein am Beginn der Dosiereinrichtung 3 angeordnetes optisches Sensorelement 33 detektiert jeweils die Vorderkante eines Etiketts und sorgt für ein positionsgenaues Anhalten des Bandes 10 so, dass das Dosierelement 20 sich oberhalb des jeweiligen Etiketts befindet. Mittels der Steuerungseinrichtung 22 wird der taktweise Vorschub des Bandes 10 entweder zeit- oder volurnenabhängig (Volumen des abgegebenen Harzes) gesteuert. Für den Fall, dass in Transportrichtung des Bandes 10 mehrere Dosierelemente 20 hintereinander angeordnet sein sollten, die gleichzeitig beaufschlagt werden, wird das Band 10 bei jedem Takt um eine entsprechende Anzahl von Etiketten vorbewegt. Als weitere Maßnahme zur Effizienzsteigerung können mehrere Bänder 10 parallel nebeneinander abgewickelt und auch beschichtet werden, wobei mehrere schmale Bänder nebeneinander beschichtet werden können oder ein breites Band, das später in mehrere schmale Bänder geschnitten oder auch als breites Band weiter verarbeitet werden kann, wenn gleichzeitig mehrere nebeneinander angeordnete Domings abgespendet werden sollen.

Das nach dem Aufbringen auf die Grundschicht 14 beim Eintritt in die Härteeinrichtung 4 noch fließfähige Material der Deckschicht 24 wird in Folge der kontinuierlichen Bestrahlung mit UV-Licht im Tunnel 27 der Härteeinrichtung 4 zunehmend härter. Im Bereich eines Austrittsquerschnitts 34 des Tunnels 27 ist das Material der Deckschicht 24 zumindest soweit ausgehärtet, dass anschließend beim Aufwickeln des Bandes 10 zur Rolle 32 die Oberseite der Deckschicht 24 nicht an der Unterseite der Trägerschicht 12 der folgenden Lage der Rolle 32 anhaftet.

Beim Abspenden der erfindungsgemäß erzeugten Doming-Etiketten von der Rolle 32, die bei Erreichen einer gewissen Größe aus der Vorrichtung 1 entfernt wird, werden die aus Deckschicht 24, Grundschicht 14 und Klebstoffschicht 13 bestehenden Etiketten von der Trägerschicht 12 abgehoben, wozu diese wie üblich mit einer Silikonbeschichtung versehen ist, so dass die Klebstoffschicht 13 an der Grundschicht 14 anhaftet und sich von der Trägerschicht 12 vollständig ablöst. Es handelt sich hierbei um den klassischen Fall eines Selbstklebeetiketts.

Je nach den gewählten Beschichtungsparametern (Material, Geometrie usw.) lassen sich die Prozessparameter der Vorrichtung 1 mit Hilfe eines Bedienpaneels 35 in weiten Grenzen frei einstellen.

Alternativ zu der beschriebenen Verwendung eines isocyanatfreien UV-härtenden Domingharzes kann unter Anwendung des erfindungsgemäßen Verfahrens auch ein Harzsystem auf Polyurethanbasis verwendet werden. In diesem Fall erfolgt die Aushärtung in der Härteeinrichtung 4 allein durch Luftkontakt der Deckschicht 24, gegebenenfalls unter zusätzlicher Wärmeeinwirkung, um die Aushärtzeit zu verkürzen. Die Bandgeschwindigkeit bzw. die Länge der Aushärteinrichtung 4 sind an die erforderliche Aushärtzeit anzupassen.

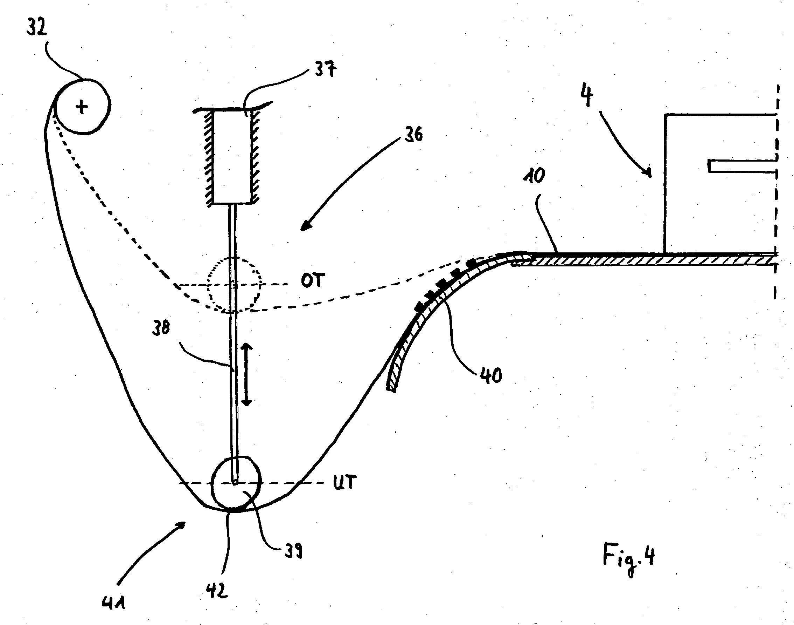

Im Unterschied zu der Vorrichtung 1 gemäß Figur 1 ist in der in Figur 4 nur ausschnittsweise gezeigten Vorrichtung 1 eine Hubeinrichtung 36 zwischen der Härteeinrichtung 4 und der Rolle 32 zum Aufwickeln des fertigen Bandes 10 vorhanden. Die Hubeinrichtung 36 weist einen Hubantrieb 37 in Form eines Pneumatikzylinders auf, an dessen Kolbenstange 38, und zwar an deren unteren Ende, ein Hubelement 39 in Form einer drehbar gelagerten Rolle angeordnet ist. Das aus der Härteeinrichtung 4 kommende Band wird über ein bogenförmiges Leitelement 40 zunächst nach unten geführt, um sodann von dem Hubelement 39 wiederum nach oben zu der Rolle 32 umgelenkt zu werden. Das Hubelement 39 führt somit zur Ausbildung einer nach oben offenen Schlaufe 41 des Bandes 10, die den jeweils tiefsten Punkt des Bandes auf seinem Weg von der Härteeinrichtung 4 auf die Rolle 32 markiert.

In Figur 4 sind das Hubelement 39 und die Kolbenstange 38 in ihrem unteren Punkt (UT) dargestellt. Von dieser Stellung ausgehend wird das Hubelement 39 mittels des Hubantriebs 37 angehoben und in die durch gestrichelte Linien veranschaulichte obere Totpunktstellung (OT) überführt. Die Schlaufe 41 bleibt zunächst frei von Kräften hängen, in einem nächsten Moment wird jedoch ein nicht dargestellter Antrieb der Rolle 32 aktiviert, so dass das die Schlaufe 41 bildende Bandmaterial aufgewickelt wird. Dabei bewegt sich das untere Ende 42 der Schlaufe 41 sukzessive nach oben. Da die Wickelgeschwindigkeit der Rolle 32 größer als die Transportgeschwindigkeit des Bandes 10 im Bereich der Härteeinrichtung 4 (und auch aller davor befindlichen Einrichtungen) ist, wird die Schlaufe 41 fortlaufend verkleinert und ist dann gänzlich aufgelöst wenn das Band 10 in der in Figur 4 gestrichelt dargestellten Position die Unterseite des Hubelements 39 in dessen oberer Totpunktstellung erreicht. In diesem Moment wird der Antrieb der Rolle 32 gestoppt. Gleichzeitig wird jedoch entweder der Hubantrieb 37 wieder aktiviert, um mit einer konstanten (geringen) Kraft durch Abwärtsbewegung die Ausbildung einer neuen Schlaufe 41 zu bewirken. Alternativ kann der Hubantrieb 37 aber auch völlig kräftefrei geschaltet werden, so dass das Hubelement 39 einschließlich der Kolbenstange 38 allein mit seinem Eigengewicht auf die Oberseite des Bandes 10 drückt, wodurch die nächste Schaufe 41 gebildet wird. Auf diese Weise wird der Abtransport des Bandes 10 aus der Härteeinrichtung 4 in kontinuierlicher Weise sichergestellt. Es versteht sich von selbst, dass an anderen Stellen des Bandverlaufs auch weitere Antriebsmittel zum Transport des Bandes 10 durch die Vorrichtung 1 angeordnet sein können.

Um insbesondere bei kleinen Wickelradien eine übermäßige Krümmung der Etiketten auf dem Band 10 zu vermeiden, kann die Trägerschicht 12 in dem Zwischenbereich Z zwischen benachbarten Etiketten perforiert oder andersartig geschwächt sein, um an den perforierten oder geschwächten Stellen eine stärkere Biegung bzw. Knickung zu erzielen als im Bereich der Etiketten selbst, wo die Trägerschicht 12 einen möglichst geradlinigen Verlauf aufweisen soll. Eine derartige Perforation oder Schwächung verbessert somit auch das Verhalten der Etiketten beim Abspenden, da ein vollflächiger Kontakt mit der Oberfläche des zu markierenden Objekts gewährleistet wird.

### Bezugszeichenliste

- 1: Vorrichtung
- 2: Abwickeleinrichtung
- 3: Dosiereinrichtung
- 4: Härteeinrichtung
- 5: Aufwickeleinrichtung
- 6: Gestell
- 7: Tischplatte
- 8: Rollenlagerung
- 9: Rolle
- 10: Band
- 11: Verbund
- 12: Trägerschicht
- 13: Klebstoffschicht
- 14: Grundschicht
- 15: Dicke
- 16, 16': Stanzlinie
- 17: Abfallbereich
- 18: Antriebseinheit
- 19: Transportrolle
- 20: Dosierelement
- 21: Verfahreinrichtung
- 22: Steuerungseinrichtung
- 23: Vorratsbehälter
- 24: Deckschicht
- 25: Kompressor
- 26: Tunnel
- 27: Tunnel
- 28: Strahler
- 29: Absaugstutzen
- 30: Niederhalter
- 31: Rollenlager
- 32: Rolle
- 33: Sensorelement
- 34: Austrittsquerschnitt
- 35: Bedienpaneel
- 36: Hubeinrichtung
- 37: Hubantrieb
- 38: Kolbenstange
- 39: Hubelement
- 40: Leitelement
- 41: Schlaufe
- 42: Ende
- N: Nutzbereich
- T: Dicke
- Z: Zwischenbereich

## Patentansprüche

1. Verfahrens zur Herstellung von Doming-Etiketten, bestehend aus einer Grundschicht (14), die an ihrer Unterseite mit einer Klebstoffschicht (13) versehen ist, einer mit einer der Oberseite der Grundschicht (14) verbundenen Deckschicht (24), und einer abnehmbar an der Klebstoffschicht (13) lösbar anhaftenden Trägerschicht (12), wobei das Verfahren die folgenden Schritte umfasst:
a) Bereitstellen eines em Verbunds (11) aus der Grundschicht (14), der Klebstoffschicht (13) und der Trägerschicht (19),
b) Formstanzen der späteren Doming-Etiketten aus dem Verbund (11), wobei nur die Grundschicht (14) und die Klebstoffschicht (13) durchtrennt werden, hingegen die Trägerschicht (12) im wesentlichen unversehrt bleibt,
c) Aufbringen der Deckschicht (24) in Gestalt jeweils einer Menge eines in fließfähigem Zustand vorliegenden Materials an verschiedenen, relativ zueinander beabstandeten Stellen mittels einer Dosiereinrichtung (3) auf die formgestanzten späteren Doming-Etiketten, wobei durch einen Fließvorgang des Materials auf der Oberfläche der Grundschicht (14) die endgültige Form der Deckschicht (24) gebildet wird,
d) das Material mindestens teilweises Aushärten der in ihrer endgültigen Form vorliegenden Deckschicht (24), wobei von dem Aufbringen der Deckschicht (24) bis zu der zumindest teilweisen Aushärtung eine im wesentlichen horizontale Ausrichtung des Verbunds (11) beibehalten wird,
**dadurch gekennzeichnet, dass**
e) der Verbund (11) aus der Grundschicht (14), der Klebstoffschicht (13) und der Trägerschicht (12) wird in Form eines Bandes (10) bereitgestellt und der Dosiereinrichtung (3) zugeführt, und anschließend durch eine Aushärteinrichtung (4) geführt,
f) und wobei das Aufbringen des fließfähigen Materials der Deckschicht (24) mittels einer Düse in Form eines Stroms auf die Grundschicht (14) erfolgt. wobei der Austrittsquerschnitt der Düse kleiner als eine Querschnittsfläche der in ihrer endgültigen Form vorliegenden Deckschicht (24) ist, sodaß aufgrund der Fließeigenshaften des Deckschichtmaterials eine gleichmäßige Verteilung erreicht wird.

2. Verfahren nach einem der Anspruch 1, **dadurch gekennzeichnet, dass** auf dem Band (10) oder auf einer Mehrzahl parallel zueinander verlaufender Bänder (10), quer zu einer Transportrichtung betrachtet, an mehreren Stellen nebeneinander gleichzeitig das Material der Deckschicht (24) aufgebracht wird.

3. Verfahren nach einem der Ansprüche 1 bis 2, **dadurch gekennzeichnet, dass** auf dem Band (10) oder auf einer Mehrzahl parallel zueinander verlaufender Bänder (10), in Transportrichtung betrachtet, an mehreren Stellen hintereinander gleichzeitig das Material der Deckschicht (24) aufgebracht wird.

4. Vorrichtung zur Herstellung von Doming-Etiketten, die eine Grundschicht (14), die auf ihrer Unterseite mit einer Klebstoffschicht (13) versehen ist, eine mit einer Oberseite der Grundschicht (14) verbundene Deckschicht und eine abnehmbar an der Klebstoffschicht (13) anhaftende Trägerschicht (12) aufweisen, nach dem Verfahren nach einem der Ansprüche 1 bis 3, mit
a) einer Dosiereinrichtung (3), mit der auf einer der Klebstoffschicht (13) abgewandten Oberfläche der Grundschicht (14), die mit der Klebstoffschicht (13) und der Trägerschicht (12) einen Verbund (11) bildet, eine Menge eines im fließfähigem Zustand vorliegenden Materials der Deckschicht (24) aufbringbar ist,
b) einer Verfahreinrichtung (21), mit der der Verbund (11) der Grundschicht (14), der Klebstoffschicht (13) und der Trägerschicht (12) relativ zu der Dosiereinrichtung (3) so bewegbar ist, dass an verschiedenen zueinander beabstandeten Stellen des Verbundes (11) das Material der Deckschicht (24) aufbringbar ist,
c) einer Härteeinrichtung (4), mit der das in seiner endgültigen Form vorliegende Material der Deckschicht (24) mittels Strahlung und/oder Temperatur und/oder Druck und/oder Luftkontakt und/oder Zusatz mindestens einer Chemikalie zumindest teilweise aushärtbar ist, wobei der Verbund (11) in der Dosiereinrichtung (3), der Härteeinrichtung (4) und auch in eventuell dazwischen befindlichen Bereichen im Wesentlichen horizontal ausgerichtet ist,
**gekennzeichnet durch**
d) Transportrollen, mit denen der in Form eines Bandes (10) vorliegende Verbund (11) aus der Grundschicht (14), der Klebstoffschicht (13) und der Trägerschicht (12) zumindest vor und bis hin zu der Dosiereinrichtung (3) förderbar ist.

5. Vorrichtung nach Anspruch 4, **gekennzeichnet durch** eine Rollenlagerung (8) für eine aus dem Band (10) bestehende Rolle (9).

6. Vorrichtung nach Anspruch 4 oder 5, **gekennzeichnet durch** eine vorzugsweise antreibbare Rollenlagerung (31) für eine aus dem Band (10) mit der ausgehärteten Deckschicht (24) zu bildende Rolle (32).

7. Vorrichtung nach einem der Ansprüche 4 bis 6, **dadurch gekennzeichnet, dass** die Härteeinrichtung (4) und/oder die Dosiereinrichtung (3) einen Tunnel (26, 27) aufweist bzw. aufweisen, mit dem bzw. denen luftgetragene Partikel von der Oberfläche der Deckschicht (24) vor deren Aushärtung fernhaltbar sind.

8. Vorrichtung nach einem der Ansprüche 4 bis 7, **dadurch gekennzeichnet, dass** mindestens ein Dosierelement (20) der Dosiereinrichtung (3), aus dem ein Strom des Materials der Deckschicht (24) abgebbar ist, in eine Richtung quer und/oder parallel zu der Transportrichtung verfahrbar ist.

9. Vorrichtung nach einem der Ansprüche 4 bis 8, **gekennzeichnet durch** eine zwischen der Härteeinrichtung (4) und einer Rolle (32) zum Aufwickeln des Bandes (10) angeordnete Hubeinrichtung (36), die ein Hubelement (39) aufweist, das auf eine Oberseite einer von dem Band (10) gebildeten Schlaufe (41) einwir kt, wobei bei einer Abwärtsbewegung des Hubelements (39) eine konstante Kraft, insbesondere lediglich dessen Gewichtskraft, auf das Band (10) wirkt und dessen Schlaufe (41) gespannt hält, wohingegen das Hubelement (39) mittels eines Hubantriebs (37) abhebbar ist, um die Schlaufe anschließend frei von äußeren Kräften **durch** Aufwickein auf die Rolle (32) aufzulösen.

## Claims

1. Process for the production of domed labels, consisting of a base layer (14) with an adhesive layer (13) on the bottom, a cover layer (24) connected to the top of the base layer (14) and a detachable backing layer (12) attached to the adhesive layer (13). The process comprises the following steps:
a. Providing a composite (11) between the base layer (14), the adhesive layer (13) and the backing layer (19),
b. shaping the future-domed labels from the composite (11), whereby only the base layer (14) and the adhesive layer (13) are separated, while the backing layer (12) remains mostly intact,
c. application of the cover layer (24) in form of the respective quantity of a material in flowable condition in several locations spaced relative to each other through a dosing unit (3) onto the shaped future-domed labels, whereby the final form of the cover layer (24) is formed by a flow process of the material on the surface of the base layer (14),
d. at least partial hardening of the cover layers (24) in their final form, whereby an essentially horizontal form of the composite (11) is maintained from the application of the cover layer (24) to partial hardening, **characterized by**
e. the composite (11) being provided in form of a tape (10) composed of the base layer (14), the adhesive layer (13) and the backing layer (12) until it is supplied to the dosing unit (3) and led through a hardening unit (4),
f. and whereby application of the flowable material of the cover layer (24) occurs through a nozzle in form of a stream onto the base layer (14), whereby the outlet profile of the nozzle is smaller than the cross-sectional layer of the cover layer (24) in its final form, so that an equal distribution is achieved through the flow characteristics of the cover layer material.

2. Process in claim 1, **characterized by** the material of the cover layer (24) being applied onto several areas next to each other onto the tape (10) or onto several tapes (10) parallel to each other when viewed transversely to the transportation direction.

3. Process following one of the claims 1 to 2, **characterized by** the material of the cover layer (24) being applied onto several areas in a row simultaneously onto the tape (10) or onto several tapes (10) parallel to each other when viewed in the transportation direction.

4. Device to produce domed labels that feature a base layer (14) with an adhesive layer (13) on the back, a cover layer (24) connected to the top side of the base layer (14) and a detachable backing layer (12) attached to the adhesive layer (13), following the process of one of the claims 1 to 3 with
a. a dosing unit (3) that can apply an amount of the material in flowable condition of the cover layer (24) onto a surface of the base layer (14) turned away from the adhesive layer (13) forming a composite (11) with the adhesive layer (13) and the backing layer (12),
b. a processing unit (21) through which the composite (11) of the base layer (14), the adhesive layer (13) and the backing layer (12) is moveable relative to the dosing unit (3) so that the material of the cover layer (24) can be applied onto several areas of the composite (11) spaced relative to each other,
c. a hardening unit (4) through which the material of the cover layer (24) can at least be partially hardened in its final form by applying radiation and/or temperature and/or pressure and/or air contact and/or adding at least one chemical, whereby the composite (11) is mostly kept horizontal in the dosing unit (3), the hardening unit (4) and possibly the area in between,
**characterized by**
d. transport rollers with which the composite (11) of the base layer (14), the adhesive layer (13) and the backing layer (12) can be transported in the form of a tape (10) at least up to the dosing unit (3).

5. Device in claim 4, **characterized by** roller bearings (8) for a roll (9) consisting of the tape (10).

6. Device in claim 4 or 5, **characterized by** preferably driven roller bearings (31) for a roll (32) to be formed out of the tape (10) with the hardened cover layer (24).

7. Device in one of the claims 4 to 6, **characterized by** the hardening unit (4) and/or the dosing unit (3) featuring a tunnel (26, 27) that keeps airborne particles from the surface of the cover layer (24) before hardening.

8. Device in one of the claims 4 to 7, **characterized by** at least one dosing element (20) of the dosing unit (3) from which a stream of the material of the cover layer (24) is exchangeable, being moveable in a direction transverse and/or parallel to the transport direction.

9. Device in one of the claims from 4 to 8, **characterized by** a lifting device (36) between the hardening unit (4) and a roll (32) to wind up the tape (10) that features a lifting element (39) that acts on the top of a loop (41) formed by the tape (10), whereby a constant force, especially its weight, is applied in a downward movement by the lifting element (39) onto the tape (10) and keeps its loop (41) stretched, while the lifting element (39) can be raised through a lift drive (37) to remove the loop by winding it up into the roll (32) free from any outside forces.

## Revendications

1. La procédure concernant la fabrication des étiquettes Doming composées d'une couche de base (14) qui est prévue au niveau de sa partie inférieure avec une couche adhésive (13), d'une couche de surface (24) liée avec la partie supérieure de la couche de base (14) et d'une couche de support (12) adhérente destinée à se détacher de la couche adhésive (13). Cette procédure comprend les étapes suivantes :
a. préparation d'un liant (11) pour la couche de base (14), la couche adhésive (13) et la couche de support (19),
b. estampage des futures étiquettes Doming par le liant (11) où uniquement la couche de base (14) et la couche adhésive (13) se retirent, par contre, la couche de support (12) reste essentiellement intacte,
c. application de la couche de surface (24) sous la forme respective d'une quantité d'un état fluide des matériaux présents à différents emplacements relativement espacés les uns des autres grâce à un dispositif de dosage (3) sur les futures étiquettes Doming estampées où la forme définitive de la couche de surface (24) est formée par un flux de matériaux sur la surface de la couche de base (14),
d. durcissement partiel au minimum de la couche de surface (24) présente dans sa forme définitive où une orientation essentiellement horizontale du liant (11) est respectée de l'application de la couche de surface (24) jusqu'au durcissement partiel minimum, **caractérisé en ce que**
e. le liant (11) de la couche de base (14), de la couche adhésive (13) et de la couche de support (12) est préparé sous la forme d'une bande (10) et le dispositif de dosage (3) est effectué avant de procéder finalement à un dispositif de durcissement (4),
f. et où l'application des matériaux fluides de la couche de surface (24) s'effectue grâce à une buse formant un flux sur la couche de base (14) où la section transversale de sortie de la buse est plus petite que la surface transversale de la couche de surface (24) présente dans sa forme définitive afin d'atteindre une répartition homogène en raison des propriétés d'écoulement du matériau de la couche de surface.

2. procédure selon la revendication 1, **caractérisée en ce que** sur la bande (10) ou sur une majorité de bandes (10) fonctionnant parallèlement les unes aux autres, transversalement à une direction de transport considérée, le matériau de la couche de surface (24) est simultanément appliqué à plusieurs emplacements les uns à côté des autres.

3. procédure selon l'une des revendications 1 à 2, **caractérisée en ce que** sur la bande (10) ou sur une majorité de bandes (10) fonctionnant parallèlement les unes par rapport aux autres, dans la direction de transport considérée, le matériau de la couche de surface (24) est simultanément appliqué à plusieurs emplacements les uns derrière les autres.

4. dispositif relatif à la fabrication des étiquettes Doming qui présente une couche de base (14), prévue sur sa partie inférieure avec une couche adhésive (13), une couche de surface liée à une partie supérieure de la couche de base (14) et une couche de support (12) adhérente destinée à se détacher de la couche adhésive (13), conformément à la procédure selon l'une des revendications 1 à 3 grâce à
a. un dispositif de dosage (3) grâce auquel une quantité de matériau de la couche de surface (24) présente à l'état fluide est appliquée sur la surface de la couche de base (14) opposée à la couche adhésive (13) qui forme un liant (11) avec la couche adhésive (13) et la couche de support (12),
b. un dispositif de procédure (21) grâce auquel le liant (11) de la couche de base (14), de la couche adhésive (13) et de la couche de support (12) est relativement mobile vers le dispositif de dosage (3) de manière à ce que le matériau de la couche de surface (24) soit appliqué à différents emplacements du liant (11) espacés les uns des autres,
c. un dispositif de durcissement (4) grâce auquel le matériau de la couche de surface (24) présent dans sa forme définitive grâce au rayonnement et / ou à la température et / ou à la pression et / ou au contact de l'air a permis le durcissement d'un composant au minimum d'un produit chimique au moins partiellement, où le liant (11) est essentiellement orienté de façon horizontale dans le dispositif de dosage (3), le dispositif de durcissement (4) et également dans les zones éventuellement situées entre elles,
caractérisée ainsi
d. des rouleaux de transport permettent au liant (11) présent sous forme d'une bande (10) provenant de la couche de base (14), de la couche adhésive (13) et de la couche de support (12) au minimum le transport avant et jusqu'au dispositif de dosage.

5. dispositif selon la revendication 4, **caractérisé par** un palier à rouleaux (8) prévu pour un rouleau (9) existant de la bande (10).

6. dispositif selon les revendications 4 ou 5, **caractérisé par** un palier à rouleaux (31) actionné de préférence pour une couche de surface (24) durcie de la bande (10) grâce au rouleau de formation (32).

7. dispositif selon l'une des revendications 4 à 6, **caractérisé en ce que** le dispositif de durcissement (4) et / ou le dispositif de dosage (3) présente et / ou présentent un tunnel (26, 27) grâce auquel et / ou auxquels les particules portées par l'air restent maintenus éloignés de la surface de la couche de surface (24) avant leur durcissement.

8. dispositif selon l'une des revendications 4 à 7, **caractérisé en ce qu'**un élément de dosage (20) au minimum du dispositif de dosage (3) permette d'émettre un flux de matériaux de la couche de surface (24) qui puisse être transmis dans une direction transversale et / ou parallèle à la direction de transport.

9. dispositif selon l'une des revendications 4 à 8, **caractérisé par** un dispositif de levage (36) placé entre le dispositif de durcissement (4) et un rouleau (32) permettant le déroulement de la bande (10) grâce à un élément de levage (39) qui agit sur la partie supérieure de toute boucle (41) formée par la bande (10) où une force constante en cas de mouvement descendant de l'élément de levage (39), notamment uniquement par la force de son poids. Ce procésus agit sur la bande (10) et tend la boucle (41) alors que l'élément de levage (39) s'élève grâce à l'actionnement de levage (37) permettant ainsi de retirer la boucle librement de toute force extérieure par l'enroulement sur le rouleau (32).
